(19) Europäisches Patentamt

European Patent Office

Office européen des brevets

(11) **EP 0 623 200 B1**

(12) **EUROPEAN PATENT SPECIFICATION**

(45) Date of publication and mention
of the grant of the patent:
**02.05.1997  Bulletin 1997/18**

(21) Application number: **93903360.1**

(22) Date of filing: **22.01.1993**

(51) Int Cl.⁶: **F16L 41/00**

(86) International application number:
**PCT/SE93/00040**

(87) International publication number:
**WO 93/15350 (05.08.1993 Gazette 1993/19)**

(54) **METHOD IN BRANCHING A TUBE**

VERFAHREN ZUM ABZWEIGEN EINES ROHRES

PROCEDE D'EMBRANCHEMENT D'UN TUBE

(84) Designated Contracting States:
**DE DK FR GB NL**

(30) Priority: **23.01.1992  SE 9200188**

(43) Date of publication of application:
**09.11.1994  Bulletin 1994/45**

(73) Proprietor: **UPONOR N.V.**
**Philipsburg Sint Maarten (AN)**

(72) Inventor: **MOLLSJÖ, Bo**
**S-510 54 Brämhult (SE)**

(74) Representative: **Ström, Tore et al**
**Ström & Gulliksson AB**
**Studentgatan 1**
**P.O. Box 4188**
**203 13 Malmö (SE)**

(56) References cited:
**WO-A-87/07353          DE-B- 2 134 169**

## Description

The invention relates to a method in branching a tube having a larger diameter, wherein an oval aperture is made in the tube wall and a flange at one end of a tube element having a smaller diameter, is inserted into the aperture from the outside of the tube and at an intermediate sealing ring is clamped against the inside of the tube and is locked in the clamped position.

For example, the intention may be to provide a branch at a predetermined angle on an underground sewer in a street for connecting a service line to a building.

To provide a branch as indicated is described in for example EP-C-307 413. The method is applied mostly to plastic tubes but the method can be applied also to tubes of other kinds. Usually the branching is made at an angle of 45° but also other angles can be provided or can be prescribed by an authority.

The tube element forming the branch on the larger tube is mounted by being rotated 90° when inserted into the aperture in the tube wall. Then the aperture in the tube wall and the flange on the tube element must have such dimensions that a sufficiently large sealing surface is available on the flange to obtain the required sealing, but at the same time it must be taken into account that the aperture in the tube wall should not be so large in the peripheral direction of the tube that the tube will be substantially weakened. This means that the length of the minor axis extending in the peripheral direction of the tube must be limited. If the aperture in the tube is congruent with the profile obtained when the tube is cut at the predetermined angle of the branch, and if it should be possible to mount the tube element through the aperture in the tube, the width of the flange, i.e. the sealing surface, must be 0. Thus, the width of the aperture, i.e. the minor axis of the aperture, must be larger than the minor axis of the profile of the cut in order to obtain a sealing surface at all.

On the other hand the aperture in the tube wall must not be made larger than is absolutely necessary because the aperture causes a weakening of the tube, especially in the peripheral direction thereof, for which reason the dimension of the aperture in the peripheral direction should be limited as far as possible.

The object of the invention is to optimize the branching in order to provide the required sealing surface on the flange, the weakening of the tube being minimized, and for this purpose the method according to the invention has obtained the characteristic features of claim 1.

In order to explain the invention in more detail the invention will be described in the following with reference to the accompanying drawing, in which

FIG. 1 is an exploded perspective view of a branch in accordance with the invention,
FIG. 2 is a plan view of the aperture in the tube, projected on a plane surface, and
FIG. 3 is a plan view of the flange on the tube element, also projected on a plane surface

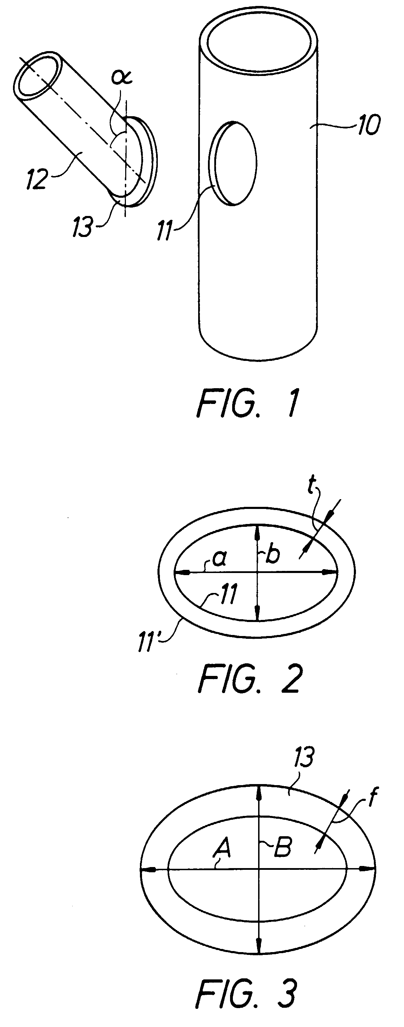

FIG. 1 shows a tube length 10 of plastic material or of any other tube material, which could be positioned in the ground or in a building as a sewer. If the tube is made of plastics the wall of the tube could be smooth on the outside as well as the inside but the tube could also be of the so called light weight type, which has radial flanges on the outside thereof, or a tube with double walls, the inner wall being smooth on the inside and on the outside thereof, while the outer wall is corrugated and is attached to the outside of the inner wall. In the tube there is made an oval aperture 11. A tube element 12 is obliquely cut at one end thereof an annular flange 13 being provided at this end. Also the tube element can be made of plastics or any other tube material. The tube element 12 is connected to the tube length 10 by being rotated 90° and being inserted from the outside into the aperture then to be clamped against the inside of the tube length, a sealing ring being located between the flange and the inside of the tube length. The flange is clamped by means of elements which are applied to the outside of the tube and which maintain permanently, possibly demountably, the tube element in the mounted position.

The aperture 11 preferably has elliptic shape as projected on a plane surface and this shape is shown in FIG. 2. The edge of the aperture is indicated at 11, the major axis of the aperture being designated a and the minor axis b. When the aperture is made some tolerance has to be taken into account. In case of a plastic tube and if the aperture is made at the working place, i.e. when the tube length 10 is located in a tube ditch, the aperture can be made by using a piercing saw and a greater tolerance has to be taken into account than when the aperture is made in a fabric by means of a robot mill. In the first case the tolerance may be 10 mm and in the latter case it may be 1 mm. In FIG. 2 the tolerance range is designated t and the edge of the largest aperture within the tolerance range is designated 11'.

The flange 13 is shown in FIG. 3 projected on a plane surface, and in this projection also the flange 13 is shaped as an ellipse but it may also have another shape adapted to the contour of the aperture. The major axis thereof extending to the outer edge is designated A, and the minor axis extending to the outer edge is designated B, the width of the flange being designated f. Usually, the flange is arranged at an angle $\alpha$ to the axis of the tube element, see FIG. 1, which is 45° but other angles may be applied in order to adapt to the local conditions when the branch is provided, or due to the prescriptions of the authorities. Preferably, the flange is curved according to the inside of the tube length, and this curvature may cause a deviation from the elliptic shape.

The major axis a of the aperture 11 has to be chosen with due consideration of the material thickness of the tube length 10 and the thickness of the sealing ring in order to obtain a free passage at the bottom of the transition between the flange and the tube element. Thus, the major axis a has to be determined from case to case. In order that the flange 13 can be inserted through the aperture 11 in the tube length 10 the minor axis B of the flange has to be made equal to the major axis a of the aperture in order to determine the largest available width f of the flange 13. For calculation of the minor axis of the aperture and the major axis of the flange as well as the maximum width f of the flange the following relationships apply

$$b = \frac{3 \sin \alpha}{2 + \sin \alpha} \times a$$

$$A = \frac{4 - \sin \alpha}{2 \times \sin \alpha} \times a$$

$$f \max = \frac{1 - \sin \alpha}{2 + \sin \alpha} \times a \tag{1}$$

The maximum value of the flange width f obtained by this calculation may be unnecessarily great. It may be justified to choose a smaller sealing surface because in that case the aperture 11 can be made smaller causing less weakening of the tube length 10.

In the method of the invention there is therefore chosen a value of the width f of the flange and a value of the major axis a of the aperture and then the remaining parameters are calculated according to the following relationships.

$$b = (a + f) \sin \alpha$$

$$A = a + 2f$$

$$B = b + 2f \tag{2}$$

The major axis a of the aperture in the tube length is chosen as indicated above with due consideration of the material thickness of the tube length 10, and the width of the flange 13 is chosen in such a way that there is sufficient space for the sealing ring to provide a perfect seal between the flange of the tube element and the inside of the tube length. In this connection a suitable value would be 15 mm, the tolerance to be taken into account in the specific case being added to this value.

EXAMPLE 1

Applying the relationships mentioned above at an angle a equal to 45° a major axis a of the aperture equal to 181 mm and a minor axis B of the flange 13 also equal to 181 mm there is obtained by using the relationships mentioned above a largest sealing surface of the flange 13 equal to 19.6 mm and the values 141 and 220 of the parameters b and A.

EXAMPLE 2

The width of the sealing surface in example 1 is too large. A width equal to 15 mm would be sufficient. Now, if this width of the sealing surface is instead chosen and the value 181 mm of the parameter a at the same time is maintained there will be obtained instead the values 139, 211 and 169 of the parameters b, A and B according to the relationships 2 above. Thus, it will be seen that the dimension b, i.e. the extension of the aperture 11 in the peripheral direction of the tube length, is considerably smaller, which means that the strength of the tube length has been weakened to a less extent than if the maximum width of the flange had been chosen.

**Claims**

1. Method in branching a tube (10) by means of a tube element (12) having a smaller diameter than the tube, an aperture (11) of substantially elliptic shape being made in the tube wall and a flange (13) also of substantially elliptic shape, at one end of the tube element (12) being inserted into the aperture from the outside of the tube and being clamped at an intermediate sealing ring against the inside of the tube and being locked in the clamped position, **characterized** in that at a predetermined width f of the flange (13) and a predetermined dimension a of the major axis of the aperture (11) the major axis A and the minor axis B of the flange as well as the minor axis b of the aperture are determined according to the relationships

$$b = (a + f) \sin \alpha$$

$$A = a + 2f$$

$$B = b + 2f$$

wherein
$\alpha$ is the angle between the flange and the axis of the tube element, all dimensions relating to the projection of the aperture and the flange, respectively, on a plane surface.

**Patentansprüche**

1. Verfahren zur Herstellung einer Abzweigung an einem Rohr (10) mittels eines Rohrelements (12) mit einem kleineren Durchmesser als das Rohr, wobei eine Öffnung (11) von im wesentlichen elliptischer Form in der Rohrwand ausgebildet ist und ein Flansch (13) an einem Ende des Rohrelements (12), der auch eine im wesentlichen elliptische Form hat, in die Öffnung von der Außenseite des Rohrs her eingesetzt und an einen Zwischendichtungsring gegen die Innenseite des Rohrs geklemmt wird und in der geklemmten Position festgelegt wird, dadurch gekennzeichnet, daß bei einer vorgegebenen Breite f des Flansches (13) und einer vorgegebenen Länge a der Hauptachse der Öffnung (11) die Hauptachse A und die Nebenachse B des Flansches sowie die Nebenachse b der Öffnung nach den folgenden Beziehungen bestimmt werden

$$b = (a + f) \sin \alpha$$

$$A = a + 2f$$

$$B = b + 2f$$

wobei
$\alpha$ der Winkel zwischen dem Flansch und der Achse des Rohrelements ist, wobei alle Abmessungen jeweils die Projektion der Öffnung bzw. des Flansches auf eine ebene Fläche betreffen.

**Revendications**

1. Procédé de création d'embranchement d'un tube (10) au moyen d'un élément de tube (11) ayant un diamètre inférieur au tube, une ouverture (11) de forme sensiblement elliptique, ménagée dans la paroi de tube et une bride (13) de forme également sensiblement elliptique, à une extrémité de l'élément de tube (12) qui est insérée dans l'ouverture, depuis l'extérieur du tube et est serrée sur une bague d'étanchéité intermédiaire contre l'intérieur du tube et verrouillée dans la position serrée, caractérisé en ce que, à une largeur f prédéterminée de la bride (13) et à dimension prédéterminée a du grand axe de l'ouverture (11), le grand axe A et le petit axe B de la bride, ainsi que le petit axe b de l'ouverture sont déterminés selon les relations

$$b = (a + f) \sin \alpha$$

$$A = a + 2f$$

$$B = b + 2f$$

dans lesquelles

$\alpha$ est l'angle entre la bride et l'axe de l'élément de tube, toutes les dimensions concernant respectivement la projection de l'ouverture et de la bride sur une surface plane.

$$B = b + 2f$$

FIG. 1

FIG. 2

FIG. 3